# EUROPEAN PATENT APPLICATION

(11) **EP 3 037 484 A1**
(43) Date of publication of application: **29.06.2016**
(21) Application number: 14838265.8
(22) Date of filing: 22.08.2014
(51) Int. Cl.: C08L 101/00, C01B 31/02, C08K 3/04

(54) **RESIN COMPOSITE MATERIAL**

(30) Priority: 23.08.2013 JP 2013173049
(71) Applicant: Nitta Corporation, Osaka-shi, Osaka 556-0022 (JP)
(72) Inventor: NAKAI Katsuyuki, Osaka-shi Osaka 556-0022 (JP); KOMUKAI Takuji, Osaka-shi Osaka 556-0022 (JP)
(74) Representative: Beetz & Partner mbB
(86) International application number: PCT/JP2014/071967
(87) International publication number: WO 2015/025944

(57) **Abstract**

There is provided a resin composite material in which problems, such as a decrease in mechanical strength of a resin and a decrease in processabilities due to an increase in resin viscosity, are overcome by using a small amount of CNTs, and in which, in spite of using a small amount of CNTs, the functions derived from the formation of a composite of CNTs and other effective functions can be exhibited. The resin composite material comprises: a resin used as a base material; and a plurality of CNTs, the plurality of CNTs forming a composite with the resin, wherein the concentration of the CNTs relative to the base material is 2.0% by volume or less; and when volume resistivity of a molded test piece of the resin composite material is measured at a plurality of predetermined points on a surface of the test piece by a four-point probe method, a ratio of a maximum value R1 of the volume resistivity to a minimum value R2 thereof is 4.0 or less.

## Description

### Technical Field

The present invention relates to a resin composite material in which CNTs (carbon nanotubes) form a composite with a resin.

### Background Art

In recent years, resin composite materials have been utilized for many industrial articles such as electrostatic trays for conveying semiconductors and fuel pumps for motor vehicles, sporting goods such as tennis rackets and golf clubs, and the like. CNT resin composite materials are functionally excellent in the functions of electrical conductivity, heat conductivity, and mechanical strength derived from CNTs. In such resin composite materials, CNTs are required to be uniformly dispersed in a resin used as a base material for exhibiting these functions. However, it is known from a large number of Patent Literatures that it is difficult to uniformly disperse CNTs in a resin (Patent Literature 1 and the like). Therefore, a large amount of CNTs have been required for exhibiting these functions.

### Citation List

### Patent Literature

Patent Literature 1: Japanese Patent Laid-Open No. 2012-250883

### Summary of Invention

### Technical Problem

However, in a conventional CNT resin composite material, the addition of a large amount of CNTs causes a decrease in the mechanical strength of a resin used as a base material and an increase in resin viscosity to cause difficulties in various types of molding, such as extrusion molding, injection molding, and press molding. Further, since the dispersion of CNTs has been poor, it has been difficult to obtain a small-sized molded article. Further, when CNTs have been excessively treated in order to improve dispersibility, the share that the CNTs occupy in a resin composite material has increased, and when the CNTs have been kneaded with a resin used as a base material, a decrease in the aspect ratio of CNTs and structural disorder have occurred. Thus, the original functions of CNTs have not been able to be exhibited. Further, there have been such problems as since CNTs are poorly dispersed in a resin, the electrical conductivity (volume resistivity) of a resin composite material has a large variation in microscopic regions.

As a result of various studies to solve the above problems, the present inventors have advanced research assuming that the problems are caused by excessive or poor dispersion of CNTs and mass use of CNTs. However, it has been difficult to exhibit the above functions unless CNTs are used in a large amount due to the aggregation property of CNTs, and it has been necessary to solve the inconsistent technical problem.

It is an object of the present invention to provide a resin composite material which can exhibit the functions derived from the formation of a composite of CNTs.

### Solution to Problem

The resin composite material according to the present invention comprises: a resin used as a base material; and a plurality of CNTs, the plurality of CNTs forming a composite with the resin, wherein a concentration of the CNTs relative to the base material is 2.0% by volume or less; and when volume resistivity of a molded test piece of the resin composite material is measured at a plurality of predetermined points on a surface of the test piece by a four-point probe method, a ratio of a maximum value R1 of the volume resistivity to a minimum value R2 thereof is 4.0 or less.

### Advantageous Effects of Invention

According to the present invention, a resin composite material which exhibits the functions derived from the formation of a composite of CNTs can be obtained by a resin composite material in which a concentration of the CNTs relative to a base material is 2.0% by volume or less; and when volume resistivity of a molded test piece of the resin composite material is measured at a plurality of points on a surface of the test piece by a four-point probe method, a ratio of a maximum value R1 of the volume resistivity to a minimum value R2 thereof is 4.0 or less.

### Brief Description of Drawings

FIG. 1A is a view for illustrating the production of CNTs used for the resin composite material according to the embodiment of the present invention and is a sectional view showing the state where an Al thin film and a Fe thin film are formed on a silicon substrate; and FIG. 1B is a sectional view showing the state where CNTs have grown on Fe fine particles.
FIG. 2A is a view for illustrating the linearity of the shape of a CNT; FIG. 2B is a view for illustrating the vertical orientation of growth direction of a CNT relative to the substrate surface; and FIG. 2C is an SEM photograph of the aggregate structure of CNTs.
FIG. 3 is an SEM photograph showing a conventional resin composite material at a magnification of 3000 times.
FIG. 4 is an SEM photograph showing the resin composite material of the present embodiment at a magnification of 3000 times.
FIG. 5 is an SEM photograph showing a conventional resin composite material at a magnification of 10,000 times.
FIG. 6 is an SEM photograph showing the resin composite material of the present embodiment at a magnification of 10,000 times.
FIG. 7 is a view showing the volume resistivity versus the degree of dispersion of CNTs of Example 1 and Comparative Example 1.
FIG. 8 is a view showing the surface resistivity versus the concentration of CNTs of Example 2.
FIG. 9 is a view showing the volume resistivity of Example 2.
FIG. 10 is a view showing the volume resistivity of Comparative Example 2.
FIG. 11A is an SEM photograph showing the resin composite material of Example 2, and FIG. 11B is an SEM photograph showing the resin composite material of Comparative Example 2.
FIG. 12A is an SEM photograph showing the resin composite material of Example 2 after the surface thereof is treated with atmospheric pressure plasma, and FIG. 12B is an SEM photograph showing the resin composite material of Comparative Example 2 after the surface thereof is treated with atmospheric pressure plasma.

### Description of Embodiments

Hereinafter, the resin composite material according to the embodiment of the present invention will be described with reference to the accompanying drawings.

The resin composite material of the present embodiment is a resin composite material comprising: a resin used as a base material; and a plurality of CNTs, the plurality of CNTs forming a composite with the resin, wherein when volume resistivity of a molded test piece of the resin composite material is measured at a plurality of predetermined points on a surface of the test piece by a four-point probe method, a ratio of a maximum value R1 of the volume resistivity to a minimum value R2 thereof is 4.0 or less.

The CNTs are preferably those having good linearity of shape and being subjected to nano-dispersion treatment, thereby the size and shape having been uniformed and an entangled aggregate having been removed. Further, the CNT is preferably a multi-walled CNT.

In a preferred embodiment, the plurality of CNTs are CNTs formed by nano-dispersion treatment of CNTs having a good linearity of shape and a fiber length of 100 nm or more. The nano-dispersion treatment is preferably a treatment in which the size and shape of the plurality of CNTs are uniformed by grinding treatment to thereby remove entangled aggregates of the plurality of CNTs.

Note that "having good linearity of shape" means that, in a range of 1 µm on an SEM photograph, 90% or more of CNTs satisfy a condition of a coefficient of determination R² of 0.970 or more and 1.0 or less. Here, R² is a coefficient of determination in the linear approximate expression (y = ax + b) by the least square method.

Further, CNTs have a fiber length of 100 nm or more because when the aspect ratio of CNTs is increased, the exhibition of electrical conductivity is achieved by adding a small amount of CNTs, thereby capable of maintaining the physical properties of a resin used as a base material.

Further, the CNTs may be, but are not particularly limited to, mono-walled CNTs or multi-walled CNTs, or CNTs in which the mono-walled CNTs and the multi-walled CNTs are mixed. Among them, the CNTs desirably include the multi-walled CNTs from the point of view that the CNTs are excellent in stiffness, and breakage hardly occurs when the CNTs form a composite with a resin. Further, CNTs in which the surface is modified with a functional group are also included in the CNTs in the present specification.

The CNTs in the CNT composite resin of the present invention are preferably multi-walled CNTs in which the inner diameter of the innermost tube is 3 nm or more and 8 nm or less, and the outer diameter of the outermost tube is 5 nm or more and 35 nm or less. Further, the multi-walled CNTs preferably have a number of walls of 3 or more and 35 or less, and the multi-walled CNTs preferably have a thermal decomposition starting temperature in the air of 500°C or more. Further, the multi-walled CNTs preferably generate a residue in an amount of 1% or less after the thermal decomposition at 900°C in the air.

"Nano-dispersion" means "a state in which CNTs are dispersed in a resin in a state in which they are physically separated into individual nanotubes and not entangled". Here, "physically separated into individual nanotubes and not entangled" means that a plurality of CNTs are present in a state in which they are isolated into individual nanotubes without taking a form in which they are aggregated in massive or bundle form by Van der Waals force.

Preferably, the resin is not particularly limited, and both thermosetting resins and thermoplastic resins can be used as the resin. Examples of the resin include an epoxy resin, a phenolic resin, a polyurethane resin, a silicone resin, a urea resin, a melamine resin, olefinic resins such as a polyethylene resin and a polypropylene resin, a polyvinyl chloride resin, an acrylic resin, a polyester resin, a nylon resin, a fluororesin, an ABS resin, a polystyrene resin, a polycarbonate resin, a polyacetal resin, a polyvinyl alcohol resin, a polyphenylene sulfide resin, a polyimide resin, a polyphenylene ether resin, a polyarylate resin, a polyamide-imide resin, a polyetherimide resin, a polyether ether ketone resin, and a polytetrafluoroethylene resin.

The resin is preferably thermoplastic resins. Among the thermoplastic resins, nylon 6, nylon 12, and polyethylene terephthalate (PET) are preferred.

Hereinafter, the production of the resin composite material of the present invention will be described.

### <Production of CNT>

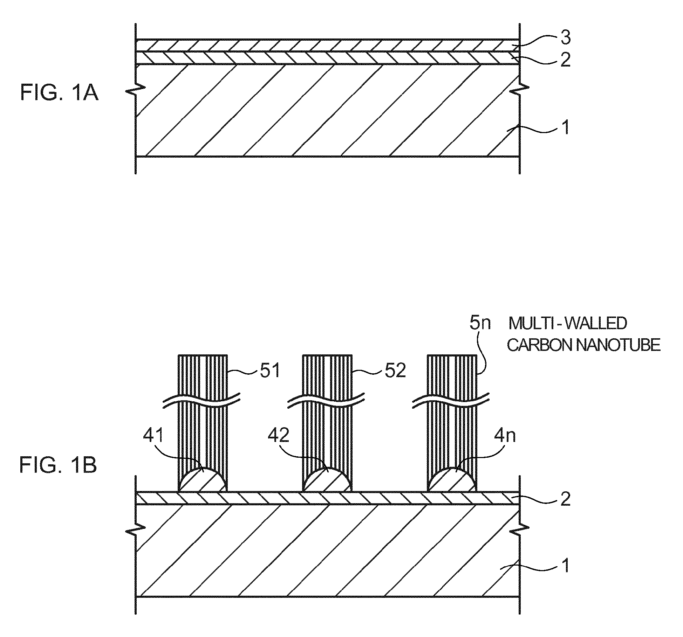

An example of the production of CNTs used for the resin composite material of the present invention by CNT growth on substrate by thermal CVD method will be described below. As shown in FIG. 1A, an A1 thin film 2 having a film thickness of 30 nm is first produced as base layer on a silicon substrate 1 having a size of 50 mm² by electron beam physical vapor deposition, and then an Fe thin film 3 having a film thickness of 20 nm is formed on the A1 thin film 2. After the film formation, the substrate 1 is placed in a silica tube having a diameter of 160 mm and then heated at 700°C for 10 minutes in a vacuum, for example, under a reduced pressure of 200 Pa. Thereby, as shown in FIG. 1B, Fe fine particles 41, 42, ···, 4n which serve as a catalyst for the growth of CNT are produced from the Fe thin film 3. Subsequently, a carbonaceous gas, such as acetylene, ethylene, methane, propane, or propylene, is fed with a predetermined flow rate of 100 sccm into the silica tube in the heated state to thereby grow CNTs 51 to 5n on the Fe fine particles 41 to 4n on the substrate 1. The CNTs 51 to 5n grown in this way are separated from the silicon substrate 1 and collected.

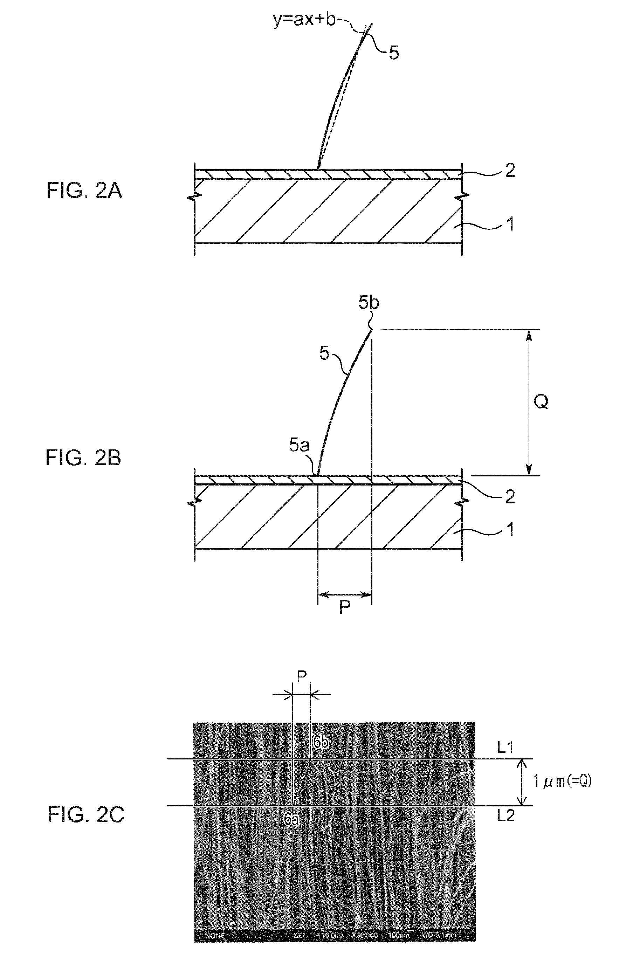

The CNTs 51 to 5n obtained by this production are CNTs having good linearity. Note that the linearity is described in Japanese Patent No. 4873413. The linearity will be described with reference to FIG. 2A to 2C. As shown in FIG. 2A, the linearity of the shape of the CNT 5 defined in the embodiment can be determined by the linear approximate expression (y = ax + b) by the least square method. In the expression, a represents the slope; b represents the intercept; and these can be determined from experimental data. In this case, a straight line is applied so that the sum of the square of variations and errors may be the minimum. Note that there is an index (coefficient of determination) R² which shows what proportion of various variations of the value y obtained by changing experimental conditions can be explained by the linear expression of y = ax + b, and the shape of CNT 5 has higher linearity as the value R² approaches 1.

Further, when the vertical orientation of the CNT 5 is described with reference to FIG. 2B, the vertical orientation (V) can be represented by V = Q/P, where P represents the horizontal difference along the surface of the substrate 1 between the position of a lower base end 5a of the CNT 5 and the position of an upper tip end 5b thereof; and Q represents the height dimension from the surface of the substrate 1, from the lower base end 5a of the CNT 5 to the upper tip end 5b thereof. The height of the lower base end 5a of the CNT 5 from the substrate surface is defined as zero. Then, as the horizontal difference (P) approaches zero, the CNT 5 has a higher vertical orientation relative to the substrate surface.

An index for determining the presence or absence of the linearity of the shape and the vertical orientation of CNTs in an actual SEM photograph and the like will be described with reference to FIG. 2C. FIG. 2C shows an SEM photograph with a magnification of 30k of an aggregate structure of CNTs. However, the magnification of the SEM photograph used for describing the index of the determination is an example. Further, CNTs used as a target for determining the vertical orientation in the SEM photograph are shown by dotted lines illustrated in the SEM photograph for easy understanding.

First, in the case of the index of the linearity of shape, CNTs which are verified to have grown in the vertical direction at low magnification observation are used as the target. In the range of a vertical distance of 1 µm (= Q) from L1 to L2 of CNTs in an SEM photograph which is magnified to a magnification by which the linearity of the CNTs can be sufficiently verified (for example, 30k), for example, the SEM photograph of FIG. 2C (P represents the horizontal difference from 6a to 6b of a CNT in a white dotted line; and L1 and L2 represent one end and the other end of the CNT in the vertical direction in the white dotted line, respectively), when 90% or more of CNTs satisfy a condition of a coefficient of determination R² of 0.970 or more and 1.0 or less, preferably more than 0.980 and 1.0 or less, the CNTs can be determined to have the linearity of shape. Here, R² is the coefficient of determination in the linear approximate expression (y = ax + b) by the least square method described in the above FIG. 2A.

In this case, the CNT is a multi-walled CNT in which the inner diameter of the innermost tube is 3 nm or more and 8 nm or less, and the outer diameter of the outermost tube is 5 nm or more and 35 nm or less. Further, the CNT is a multi-walled CNT having a number of walls of 3 or more and 35 or less.

The CNTs produced in this way are ground with a centrifugal mill (manufactured by Retsch GmbH, model: ZM 200), in which the shape and size of the CNTs are made uniform, and entangled aggregates are removed, thereby capable of obtaining nano-dispersed CNTs from CNTs having excellent linearity and a length of 100 nm or more.

Note that the centrifugal mill is used strictly for uniforming the shape of CNTs to be charged into a kneading apparatus to be described below, and has no function of changing structures, such as the length and linearity of CNTs, in itself. The CNTs produced by the CNT growth on substrate by thermal CVD method of the embodiment have high density and are vertically oriented, and they are connected in the state where the CNTs are peeled from the substrate, thereby forming a stringiness state. The CNTs in a stringiness state are poorly mixed with a resin used as a raw material and poorly dispersed, for example, due to the occurrence of segregation of CNTs in the resin. The poorly dispersed CNTs remain in this state. Therefore, CNTs are ground with a centrifugal mill and classified, thereby obtaining nano-dispersed CNTs.

Nano-dispersion as described herein means a state in which CNTs are physically separated into individual nanotubes and not entangled and in which the percentage of aggregates in which two or more CNTs are aggregated in a bundle form is 10% or less.

### <Kneading of CNT with Resin and Molding>

Next, the CNTs nano-dispersed as described above is kneaded with a resin to obtain a resin composite material. In this case, the concentration of kneaded CNTs is a concentration in which the kneaded CNTs are contained in an amount of 2.0% by volume or less relative to the resin.

Note that a method for molding a molded test piece of a resin composite material is not particularly limited, but common methods for molding a resin can be used. Examples include compression molding, blow molding, inflation molding, calendar molding, extrusion molding, injection molding, casting, and transfer molding.

Here, referring to the concentration of CNTs, if the concentration is a low concentration of 2.0% volume or less, the share that the CNTs occupy relative to a resin will decrease from before, thereby decreasing not only a decrease in mechanical strength of the resin but also resin viscosity.

### <Action and Effect>

CNTs having good linearity are used in the resin composite material according to the present embodiment. Thereby, the resin composite material can exhibit functions derived from the formation of a composite of CNTs, for example, high electrical conductivity and excellent mechanical strength irrespective of low CNT concentration since the CNTs are satisfactorily dispersed in a resin. The electrical conductivity as a function derived from the formation of a composite of CNTs can be evaluated, for example, by the resistivity measured by a four-point probe method.

In a preferred embodiment, the measurement points in the four-point probe method is at least 5 points or more and 20 points or less, preferably 10 points or more and 15 points or less. If the measurement points are less than 5 points, it will be difficult to evaluate the variation of electrical conductivity of a CNT composite resin in detail; and if the measurement points are more than 20 points, there will be such problems as the size of a molding test piece is limited and an increase in measurement points is inefficient and requires a long time for measurement.

When the resin composite material of the present embodiment was molded to form a test piece, and the volume resistivity of the test piece was measured at predetermined 10 points on a surface of the test piece by a four-point probe method according to JIS (K7194), a ratio r (= R1/R2) of a maximum value R1 of the volume resistivity to a minimum value R2 thereof was 4.0 or less.

Here, the four-point probe method is a method of calculating the ratio r by placing four needle-like electrodes (four-point probes) in a straight line on a test piece, passing constant current between the two outer probes and measuring the potential difference occurred between the two inner probes to determine resistance, and multiplying the determined resistance (Ω) by the thickness t (cm) of the test piece and a correction coefficient RCF.

In the present embodiment, the ratio r is 4.0 or less, which shows that although the content of CNTs in a resin composite material is low, they are uniformly nano-dispersed in a resin. Thereby, the resin composite material of the present embodiment can exhibit functions of electrical conductivity, thermal conductivity, and mechanical strength derived from CNTs, in which a decrease in the mechanical strength of a resin used as a base material is suppressed, and the occurrence of problems such as a decrease in processabilities due to an increase in viscosity is mitigated.

Note that the measurement of resistance values includes a two-terminal method, a four-terminal method, a four-point probe method, and a van der Pauw's method. The four-point probe method has the advantage that the resistance values can be measured only by pushing the electrodes against a test piece. Further, as a resistance value to be measured, it is preferred to use volume resistivity in which the nano-dispersion state of CNTs is not dependent on the shape of a test piece.

Then, CNTs can form a composite with a resin in the state in which the CNTs are nano-dispersed by limiting the magnitude of a ratio r to 4.0 or less as described above, the ratio r being a ratio of the maximum value to the minimum value of the volume resistivity measured at a plurality of points, 10 points in the present embodiment, on a test piece.

Therefore, since the resin composite material of the present embodiment is free from an increase in resin viscosity by the addition of a small amount of CNTs, it is a resin composite material excellent in processabilities in various types of molding, such as extrusion molding, injection molding, and press molding.

Further, since CNTs are nano-dispersed, small-sized molded articles can be easily obtained. Further, since CNTs are suitably (neither excessively nor poorly) dispersed, a decrease in the aspect ratio and structural disorder of CNTs do not occur. Therefore, the original functions of CNTs can be exhibited.

Further, since CNTs are not poorly dispersed in a resin, the electrical conductivity (volume resistivity) of a resin composite material is uniform even in microscopic regions.

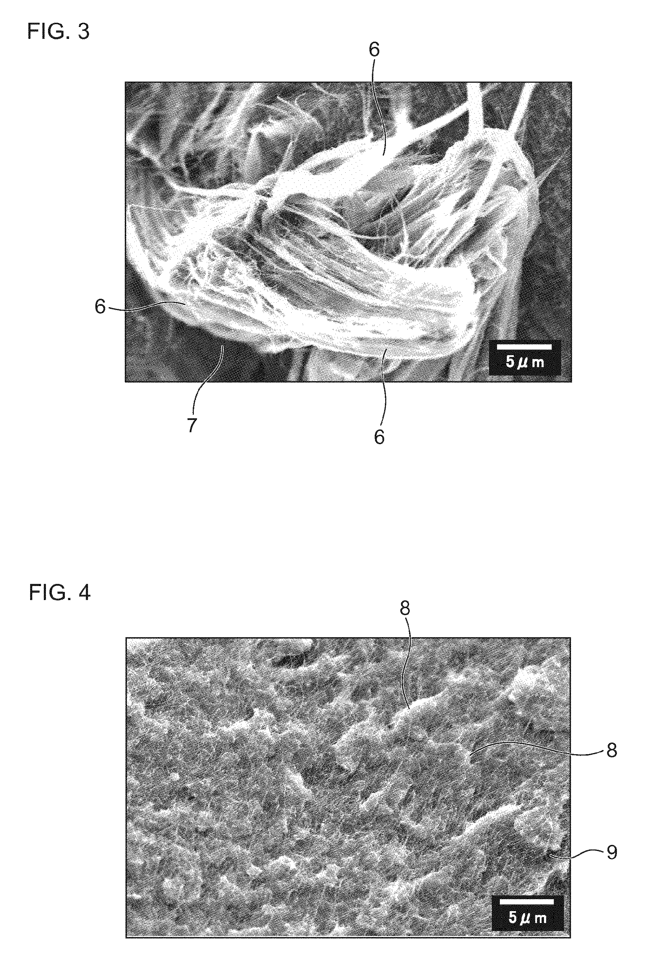

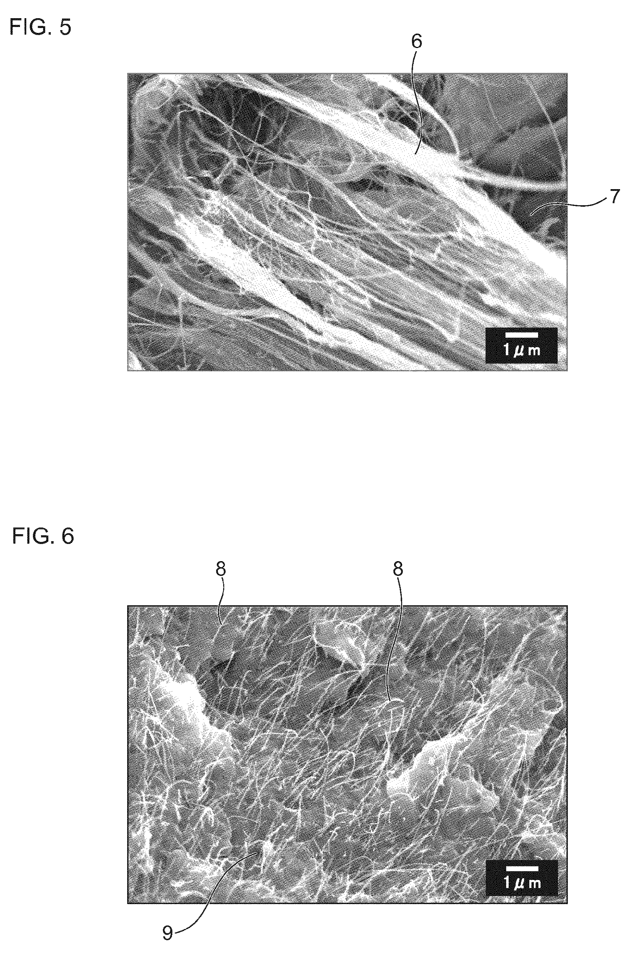

Note that FIG. 3 and FIG. 5 show SEM photographs of conventional resin composite materials, and FIG. 4 and FIG. 6 show the resin composite material of the present invention. FIG. 3 and FIG. 4 show SEM photographs at a magnification of 3000 times, and FIG. 5 and FIG. 6 show SEM photographs at a magnification of 10,000 times. In FIG. 3 and FIG. 5, reference numeral 6 denotes an area of CNT aggregation, and reference numeral 7 denotes a resin. In the SEM photographs, the area of CNT aggregation 6 came out white, and the resin 7 came out dark. As shown in FIG. 3 and FIG. 5, a conventional resin composite material uses a large amount of CNTs at high concentrations and has many areas of CNT aggregation 6, which is a resin composite material having the problems as described above. In FIG. 4 and FIG. 6, reference numeral 8 denotes a CNT, and reference numeral 9 denotes a resin. As shown in the SEM photographs of FIG. 4 and FIG. 6, the resin composite material of the present invention is a resin composite material in which CNTs 8 are uniformly dispersed throughout the whole resin 9 with no area of aggregation and which is excellent in exhibiting functions.

### Examples

### (Example 1)

### <Kneading>

2.0 g of CNTs produced according to the procedure described in the above "Production of CNT" and 52.2 g of nylon 6 pellets (A1030FR manufactured by Unitika, Ltd.) are weighed. This is the concentration at which the CNTs are contained in a base material in an amount of 2.0% by volume.

Next, the weighed CNTs and resin were kneaded in a testing device for kneading and extrusion evaluation (trade name: LABO PLASTOMILL) manufactured by Toyo Seiki Seisaku-Sho Ltd. Note that a twin-screw extruder or the like may be used as other kneading apparatuses. The conditions of the kneading include a temperature of 230°C, a number of revolution of 50 to 150 rpm, and a mixing time of 10 to 20 minutes. As a result of the kneading as described above, a resin composite material according to Example 1 was obtained. For purposes of comparison, a resin composite material according to Comparative Example 1 was produced in the same manner as in Example 1 described above except that a grinding step using a centrifugal mill for the purpose of uniforming the shape and size of CNTs and removing aggregates was omitted.

### <Measurement Test>

The resin composite materials of Example 1 and Comparative Example 1 were each molded with a hot pressing machine (trade name: AYSR-5) manufactured by SHINTO Metal Industries Corporation to form film molded products each having a thickness of about 220 µm.

The resin composite material of Example 1 is a resin composite material obtained in the above < Kneading > in which the CNTs having good dispersibility have formed a composite, where the concentration of CNTs was set to 2.0% by volume.

The resin composite material of Comparative Example 1 is a resin composite material in which CNTs having poor dispersibility have formed a composite, where the concentration of CNTs was set to 2.0% by volume.

The resin composite materials of Example 1 and Comparative Example 1 were each used to prepare a test piece, and the volume resistivity at 10 points on the surface of each test piece was measured with a four-point probe resistance measurement instrument (manufactured by NAPSON CORPORATION, model: RG-7 B/RT-70). The ratio (maximum to minimum ratio of volume resistivity) r of the maximum value R1 to the minimum value R2 of the variations in measured values was calculated for the measured volume resistivity.

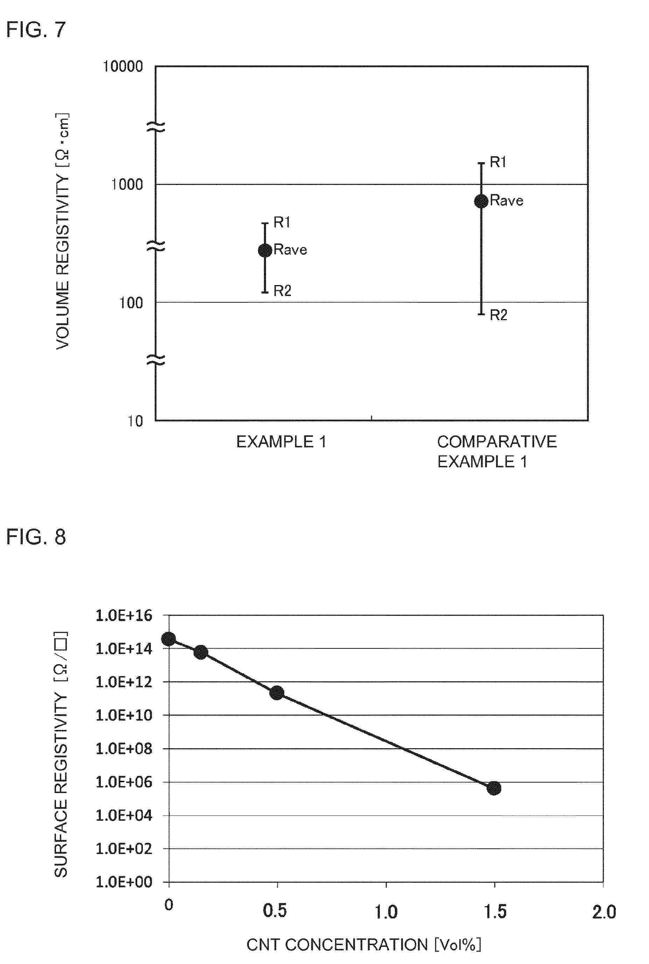

The results are shown in FIG. 7. The axis of ordinates of FIG. 7 shows volume resistivity (Ω·cm), and is shown by logarithm. The maximum value R1 of the volume resistivity measured at 10 points on a surface of the test piece of Example 1 was 483 (Ω·cm); the minimum value R2 of the volume resistivity measured at 10 points on the surface was 124 (Ω·cm); the average value Rave (black circle mark in FIG. 7) of the volume resistivity measured at 10 points on the surface was 279 (Ω·cm); and the ratio (maximum to minimum ratio of volume resistivity) r of the maximum value R1 to the minimum value R2 was 3.9.

The maximum value R1 of the volume resistivity measured at 10 points on a surface of the test piece of Comparative Example 1 was 1600 (Ω·cm); the minimum value R2 of the volume resistivity measured at 10 points on the surface was 81 (Ω·cm); the average value Rave (black circle mark in FIG. 7) of the volume resistivity measured at 10 points on the surface was 729 (Ω·cm); and the ratio (maximum to minimum ratio of volume resistivity) r of the maximum value R1 to the minimum value R2 was 19.7.

When these results were compared, in Example 1, although the CNT concentration was low, the degree of dispersion of CNTs was good; CNTs were uniformly dispersed throughout the whole resin; the ratio (R1/R2) was 4.0 or less; and the volume resistivity was small, resulting in good electrical conductivity.

On the other hand, in Comparative Example 1, although the CNT concentration was high, the degree of dispersion of CNTs was poor; CNTs were not dispersed throughout the whole resin; the ratio (R1/R2) was more than 4.0; and the volume resistivity was large, resulting in poor electrical conductivity.

### (Example 2)

A resin composite material according to Example 2 was produced in the same manner as in Example 1 except that the resin in Example 1 described above was replaced with nylon 12 pellets (manufactured by Daicel-Evonik Ltd., model: DAIAMID L1901). For purposes of comparison, a resin composite material according to Comparative Example 2 was produced in the same manner as in Example 2 described above except that a grinding step using a centrifugal mill for the purpose of uniforming the shape and size of CNTs and removing aggregates was omitted.

The resin composite material of Example 2 was used to prepare a test piece, and the surface resistivity at 10 points on the surface of the test piece was measured with a four-point probe resistance measurement instrument (manufactured by NAPSON CORPORATION, model: RG-7 B/RT-70). The results are shown in FIG. 8. In FIG. 8, the axis of ordinates shows surface resistivity (Ω/), and the axis of abscissas shows CNT concentration (vol/%). FIG. 8 reveals that the surface resistivity decreases as the CNT concentration increases.

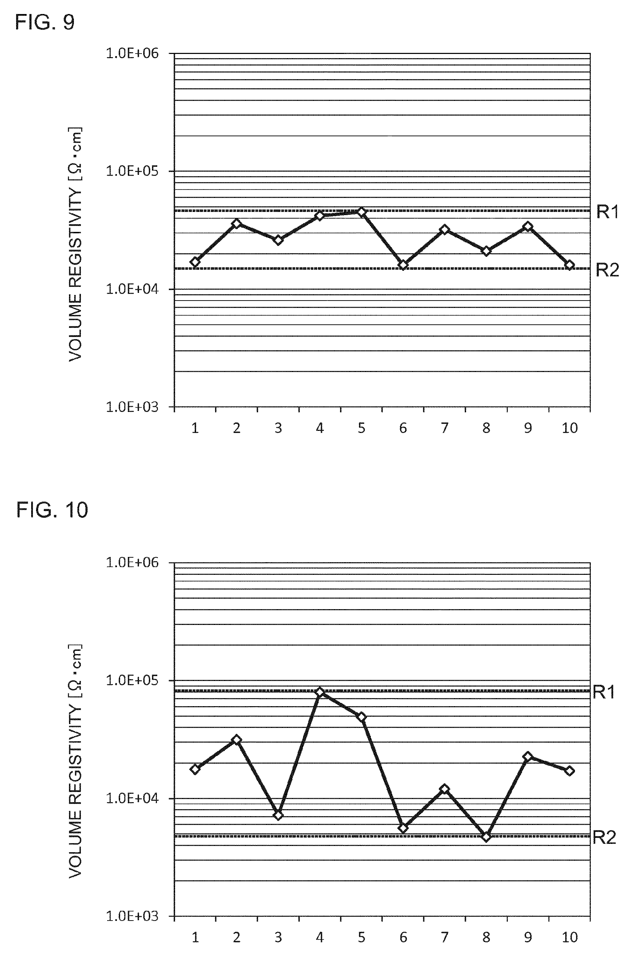

Next, the resin composite material of Example 2 in which the CNT concentration was set to 2.0 (vol/%) was used to prepare a test piece, and the volume resistivity at 10 points on the surface of the test piece was measured with a four-point probe resistance measurement instrument (manufactured by NAPSON CORPORATION, model: RG-7 B/RT-70). In Comparative Example 2, the CNT concentration was set to 2.0 (vol/%), and volume resistivity was measured in the same manner as in Example 2. The results are shown in FIG. 9 and FIG. 10. In FIG. 9 and FIG. 10, the axis of ordinates shows volume resistivity (Ω·cm), and the axis of abscissas shows measurement points.

When the ratio (maximum to minimum ratio of volume resistivity) r of the maximum value R1 to the minimum value R2 of the variations in measured values was calculated for the measured volume resistivity, it was found that r= 2.8 in Example 2 and r= 16.9 in Comparative Example 2. From these results, it was verified that, in the resin composite material according to Example 2, CNTs were satisfactorily dispersed because, although the CNT concentration was low, the variations of volume resistivity was small, and good electrical conductivity derived from the formation of a composite of CNTs was obtained.

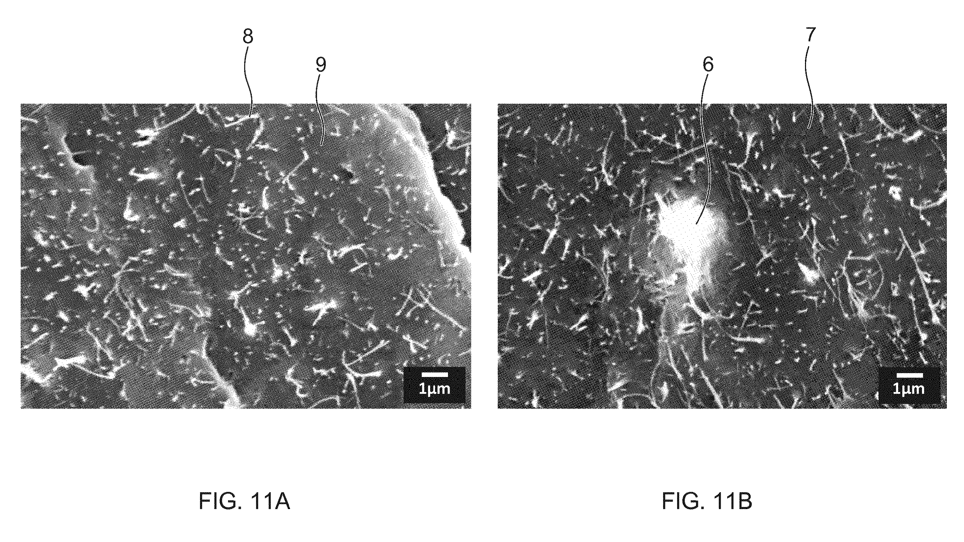

FIG. 11A shows an SEM photograph of the produced resin composite material according to Example 2, and FIG. 11B shows an SEM photograph of the resin composite material according to Comparative Example 2. These figures reveal that, in the resin composite material according to Example 2, CNTs 8 are not aggregated but uniformly dispersed throughout the whole resin 9; on the other hand, in the resin composite material according to Comparative Example 2, the area of CNT aggregation 6 was verified in the resin 7.

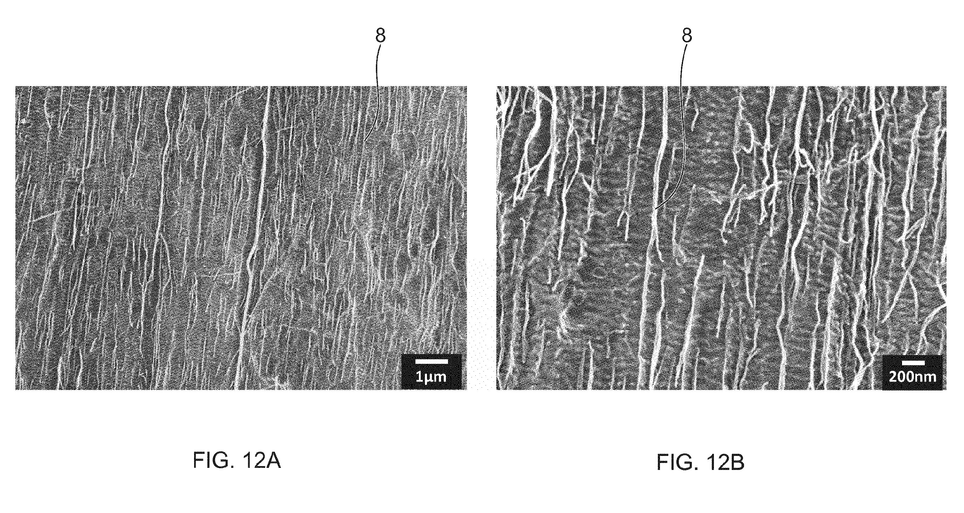

Further, FIG. 12 shows an SEM photograph of the produced resin composite material according to Example 2 after the surface thereof is etched with atmospheric pressure plasma. The atmospheric pressure plasma was applied under the following conditions: plasma method: dielectric barrier discharge (He gas), pulse voltage: 7 kV, duty ratio: 50%, frequency: 10 kHz, nozzle distance: 10 mm, and treatment time: 10 minutes. In FIG. 12, it is found that CNTs 8 came out more clearly, showing that they are uniformly dispersed throughout the whole resin.

Note that the present invention is not limited to the embodiment described above, and various modifications can be made by those skilled in the art without departing from the technical ideas of the present invention.

### Reference Signs List

- 8: CNT
- 9: Resin

## Claims

1. A resin composite material comprising: a resin used as a base material; and a plurality of CNTs, the plurality of CNTs forming a composite with the resin, wherein
a concentration of the CNTs relative to the base material is 2.0% by volume or less; and
when volume resistivity of a molded test piece of the resin composite material is measured at a plurality of predetermined points on a surface of the test piece by a four-point probe method, a ratio of a maximum value R1 of the volume resistivity to a minimum value R2 thereof is 4.0 or less.

2. The resin composite material according to claim 1, wherein the CNTs are synthesized by CNT growth on substrate by thermal CVD method.

3. The resin composite material according to claim 2, wherein the CNTs are CNTs formed by nano-dispersion treatment of CNTs having a good linearity of shape and a fiber length of 100 nm or more.

4. The resin composite material according to claim 2, wherein the CNTs are multi-walled CNTs in which the inner diameter of the innermost tube is 3 nm or more and 8 nm or less, and the outer diameter of the outermost tube is 5 nm or more and 35 nm or less.

5. The resin composite material according to claim 1, wherein the resin is a thermoplastic resin.

6. The resin composite material according to claim 1, wherein the CNTs are ground and classified and then kneaded with the resin.
